(19) Europäisches Patentamt
European Patent Office
Office européen des brevets

(11) Veröffentlichungsnummer : **0 219 759 B1**

(12) # EUROPÄISCHE PATENTSCHRIFT

(45) Veröffentlichungstag der Patentschrift : **07.09.88**

(51) Int. Cl.⁴ : **C 07 C125/08**, A 01 N 47/40

(21) Anmeldenummer : **86113879.0**

(22) Anmeldetag : **07.10.86**

(54) **Diphenyletherderivate, Verfahren zu ihrer Herstellung und ihre Verwendung zur Bekämpfung von unerwünschtem Pflanzenwachstum.**

(30) Priorität : **15.10.85 DE 3536664**

(43) Veröffentlichungstag der Anmeldung : **29.04.87 Patentblatt 87/18**

(45) Bekanntmachung des Hinweises auf die Patenterteilung : **07.09.88 Patentblatt 88/36**

(84) Benannte Vertragsstaaten : **BE CH DE FR GB IT LI NL**

(56) Entgegenhaltungen :
**EP-A- 0 019 388**
**EP-A- 0 020 052**
**EP-A- 0 027 837**
**US-A- 3 928 416**
**US-A- 4 400 530**

(73) Patentinhaber : **BASF Aktiengesellschaft**
**Carl-Bosch-Strasse 38**
**D-6700 Ludwigshafen (DE)**

(72) Erfinder : **Lange, Arno, Dr.**
**Oberes Gaistal 3b**
**D-6702 Bad Duerkheim-Hardenburg (DE)**
Erfinder : **Wuerzer, Bruno, Dr.**
**Ruedigerstrasse 13**
**D-6701 Otterstadt (DE)**
Erfinder : **Meyer, Norbert, Dr.**
**Dossenheimer Weg 22**
**D-6802 Ladenburg (DE)**

**EP 0 219 759 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Diphenyletherderivate, Verfahren zu ihrer Herstellung, Herbizide, die diese Verbindungen als Wirkstoffe enthalten, sowie ein Verfahren zur Bekämpfung von unerwünschtem Pflanzenwachstum mittels der neuen Verbindungen.

Es ist bekannt, daß Diphenylethercarbonsäureamide sowie Verbindungen der Formel I, in der statt -N(CN)- Sauerstoff oder Schwefel und $R^1$ und $R^2$ für Wasserstoff, $C_1$-$C_4$-Alkyl, -Oxoalkyl und -Hydroxyalkyl stehen, herbizid wirksam sind (JP-A-48 129/1975, Ep-A-19 388, EP-A-20 052, EP-A-27 837, US 3 928 416, US-A-4 400 530).

Es wurde nun gefunden, daß Diphenyletherderivate der Formel I

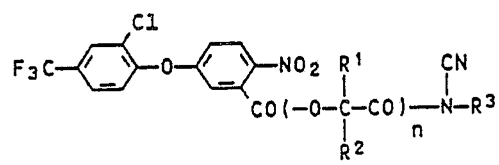 (I)

in der

$R^1$ Wasserstoff, $C_1$-$C_4$-Alkyl oder $C_2$-$C_8$-Alkoxyalkyl,

$R^2$ Wasserstoff, $C_1$-$C_4$-Alkyl, $C_2$-$C_4$-Alkenyl oder $C_2$-$C_4$-Alkinyl,

$R^3$ Wasserstoff, $C_1$-$C_4$-Alkyl, $C_2$-$C_4$-Alkenyl, $C_2$-$C_4$-Alkinyl oder $C_3$-$C_8$-Cycloalkyl, wobei diese Reste gegebenenfalls jeweils durch $C_1$-$C_4$-Alkoxy substituiert sind, und

n 0 oder 1 bedeuten,

sowie Salze der Verbindungen, in denen $R^3$ die Bedeutung von Wasserstoff besitzt, herbizid wirksam und gegenüber Kulturpflanzen selektiv sind.

Für den Fall, daß die Verbindungen der Formel I ein oder mehrere asymmetrische Kohlenstoffatome aufweisen, können sie in enantiomeren bzw. diastereomeren Formen auftreten, die alle vom Patentanspruch umfaßt werden.

$R^1$ in Formel I bedeutet Wasserstoff ; $C_1$-$C_4$-Alkyl, z. B. Methyl, Ethyl, Propyl, Isopropyl, n-Butyl, But-2-yl, Isobutyl oder tert-Butyl ; oder Alkoxyalkyl, das insgesamt 2 bis 8 Kohlenstoffatome aufweist, z. B. Methoxymethyl, Ethoxymethyl, 2-Methoxyethyl, 2-Ethoxyethyl, 1-Methoxyprop-2-yl, 2-Methoxypropyl, 4-Methoxybutyl, 4-Butoxybutyl, 6-Methoxyhexyl oder 6-Ethoxyhexyl.

$R^2$ in Formel I bedeutet Wasserstoff ; $C_1$-$C_4$-Alkyl, z. B. Methyl, Ethyl, Propyl, Isopropyl, n-Butyl, But-2-yl, Isobutyl oder tert-Butyl ; $C_2$-$C_4$-Alkenyl, z. B. Vinyl, Prop-1-en-3-yl, Prop-1-en-2-yl, Prop-1-en-1-yl, But-1-en-1-yl, But-1-en-2-yl, But-1-en-3-yl oder 2-Methylprop-1-en-3-yl ; oder $C_2$-$C_4$-Alkinyl, z. B. Ethinyl, Propargyl oder But-1-in-1-yl.

$R^3$ in Formel I bedeutet Wasserstoff, $C_1$-$C_4$-Alkyl, $C_2$-$C_4$-Alkenyl, $C_2$-$C_4$-Alkinyl oder $C_3$-$C_8$-Cycloalkyl, wobei diese Reste jeweils durch $C_1$-$C_4$-Alkoxy substituiert sein können, z. B. Methyl, Ethyl, Propyl, Isopropyl, Butyl, Isobutyl, 2-Methoxyethyl, 4-Ethoxybutyl, Vinyl, Prop-1-en-3-yl, Prop-1-en-1-yl, But-1-en-1-yl, 2-Methylprop-1-en-3-yl, 4-Ethoxybut-1-en-1-yl, Ethinyl, Propargyl, But-1-in-1-yl, Cyclopropyl, Cyclobutyl, Cyclopentyl, Cyclohexyl, Cycloheptyl, Cyclooctyl, 3-Methoxycyclopentyl oder 4-Ethoxycylcohexyl.

Für den Fall, daß $R^3$ in Formel I die Bedeutung von Wasserstoff besitzt, können diese Verbindungen auch als Salze vorliegen. Als Salze kommen landwirtschaftlich brauchbare Salze, beispielsweise Alkalimetallsalze, insbesondere Kalium- oder Natriumsalze, Erdalkalimetallsalze, insbesondere Calcium-, Magnesium- oder Bariumsalze, Mangan-, Kupfer-, Zink- oder Eisensalze sowie, wenn Y für 0 oder S steht. Ammonium-, Phosphonium-, Sulfonium- oder Sulfoxoniumsalze, beispielsweie Ammoniumsalze, Tri- oder Tetraalkylammoniumsalze, Benzyltrialkylammoniumsalze, Trialkylsulfoniumsalze oder Trialkylsulfoxoniumsalze in Betracht.

Bevorzugt sind Verbindungen, bei denen $R^1$ und $R^2$ unabhängig voneinander jeweils Wasserstoff oder Methyl und $R^3$ Wasserstoff oder $C_1$-$C_4$-Alkyl bedeuten.

Die Diphenyletherderivate der Formel I können durch Umsetzung von Säurederivaten der Formel II

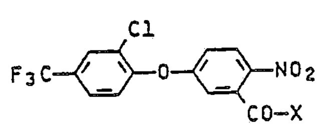 (II)

in der X Halogen, vorzugsweise Chlor oder Brom oder $C_1$-$C_4$-Alkoxy bedeutet, mit einer Verbindung der Formel III

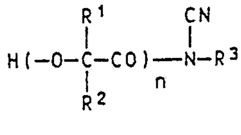 (III)

in der $R^1$, $R^2$, $R^3$ und n jeweils die oben genannte Bedeutung besitzen, erhalten werden.

Zweckmäßig führt man die Reaktion in einem inerten Verdünnungsmittel bei einer Temperatur von —40 °C bis +150 °C, vorzugsweise —20 °C bis + 30 °C, gegebenenfalls in Gegenwart einer Base durch. Das Molverhältnis von Säurederivat II : Vervindung III soll dabei 1 : 1 bis 1 : 2, vorzugsweise 1 : 1 bis 1 : 1, 2 betragen.

Vorzugsweise verwendet man dabei die Verbindung III in Form eines Salzes, insbesondere eines Metallsalzes der Gruppe 1A oder 2A des Periodensystems oder auch, wenn n = 1, eines gegebenenfalls alkylierten Ammoniumsalzes. Dazu wird Verbindung III mit einer entsprechenden Base versetzt. Geeignete Basen sind z. B. Carbonate, Hydrogencarbonate, Alkoholate, Hydroxide. Oxide oder Hydride von Alkali- oder Erdalkalimetallen, insbesondere von Natrium, Kalium, Magnesium oder Calcium. Unter den o.g. Voraussetzungen können auch organische Basen, wie Pyridin oder tertiäre Amine zur Anwendung kommen.

In einigen Fällen empfiehlt es sich, die Base im Überschuß (bezogen auf Verbindung III) einzusetzen und die Umsetzung des Säurederivats II unter Basenkatalyse durchzuführen.

Geeignete inerte Verdünnungsmittel sind beispielsweise Wasser ; aromatische und aliphatische Kohlenwasserstoffe, wie Ligroin, Benzin, Benzol, Toluol, Xylol, Pentan, Hexan, Cyclohexan oder Petrolether ; aromatische und aliphatische Halogenkohlenwasserstoffe, wie Methylenchlorid, Chloroform, Tetrachlorkohlenstoff, 1,1- und 1,2-Dichlorethan 1,1,1- und 1,1,2- Trichlorethan, Chlorbenzol, o-, m- und p-Dichlorbenzol oder o-, m- und p-Chlortoluol ; aromatische und aliphatische Nitrokohlenwasserstoffe, wie Nitrobenzol, o-, m- und p-Nitrotoluol oder Nitroethan ; Nitrile, wie Acetonitril, Butyronitril oder Isobutyronitril ; Ether, wie Diethylether, Di-n-propylether, Tetrahydrofuran oder Dioxan ; Ester, wie Acetessigester, Ethylacetat oder Isobutylacetat ; Ketone, wie Aceton, Methylethyl-, Methylisopropyl- oder Methylisobutylketon ; Alkohole, wie Methanol, Ethanol oder Propanol ; Amide, wie N-Methylformamid oder N,N-Dimethylformamid ; oder schwefelhaltige lösungsmittel wie Dimethylsulfoxid oder Sulfolan. Auch Gemische dieser Lösungsmittel können verwendet werden.

Die Umsetzung ist im allgemeinen nach 0,5 bis 5 Stunden beendet. Das Zielprodukt kann nach Abtrennen der anorganischen Salze und Entfernen des Verdünnungsmittels unter vermindertem Druck isoliert werden. Falls erforderlich, können Produkte, die in festem Aggregatzustand anfallen, durch Umkristallisation weiter gereinigt werden. Produkte, die als Öl anfallen, werden gegebenenfalls mittels Säulenchromatographie weiter gereinigt.

Für den Fall, daß man in Wasser oder wassermischbaren Verdünnungsmitteln arbeitet, kann das Reaktionsgemisch auch in Wasser eingetragen und nötigenfalls neutralisiert werden. Die Zielprodukte fallen dabei in festem Aggregatzustand oder als Öl an. Sie werden abgetrennt und wie oben ausgeführt gegebenenfalls weiter gereinigt.

Ähnliche Herstellverfahren sind an sich bekannt und in der DE-A-1 907 193, DE-A-2 757 586 sowie in Chem. Pharm. Bull. 24, 26 (1976) beschrieben. Die verwendeten Ausgangsprodukte sind bekannt.

Diphenyletherderivate der Formel I, in der n 1 bedeutet, können weiterhin durch Umsetzung eines Säurederivats der Formel IV

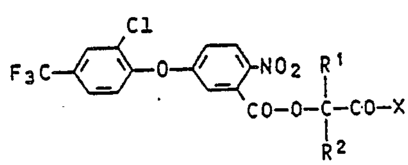

(IV)

in der $R^1$, $R^2$ und X jeweils die oben genannte Bedeutung besitzen, mit einer Verbindung der Formel V

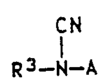

(V)

erhalten werden, in der $R^3$ die oben genannte Bedeutung besitzt und A für Wasserstoff oder ein Metall der Gruppe 1A oder 2A des Periodensystems, z. B. Lithium, Natrium, Kalium, Magnesium oder Calcium, steht.

Eine weitere Herstellmöglichkeit für die Diphenyletherderivate der Formel I (mit n = 1) besteht in der Umsetzung eines Säurederivats der Formel VI

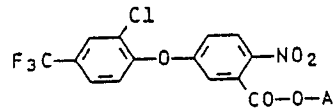

(VI)

in der A die oben genannte Bedeutung besitzt, mit einer Halogenverbindung der Formel VII

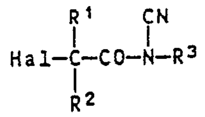

(VII)

in der $R^1$, $R^2$ und $R^3$ jeweils die oben genannte Bedeutung besitzen und Hal für Halogen, vorzugsweise Chlor oder Brom steht.

Die beiden letztgenannten Herstellvarianten werden bei einer Temperatur von — 20 bis + 150 °C, vorzugsweise 30 bis 120 °C und ansonsten unter den oben (für die Reaktion II + III → I) aufgeführten Reaktionsbedingungen durchgeführt.

Auch hier sind die Ausgangsprodukte bekannt oder können nach an sich bekannten Methoden (z. B. EP-A-148 119) hergestellt werden.

Schließlich können die Diphenyletherderivate der Formel I, bei denen $R^3$ Wasserstoff darstellt, auch durch eine übliche N-Alkylierungsreaktion in die jeweils N-substituierten Produkte übergeführt werden.

Die nachfolgenden Beispiele sollen die Erfindung näher erläutern.

## Beispiel 1

A) 51,4 g n-Propylamin wurden in 300 ml Ether vorgelegt. Bei — 10 °C wurden 46 g Bromcyan, gelöst in 100 ml Ether, zugetropft. Man rührte 1 Stunde bei — 10 °C nach, erwärmte innerhalb einer Stunde auf Raumtemperatur und rührte noch 30 Minuten bei dieser Temperatur nach.

Es wurde abgesaugt, der Rückstand mit Ether gewaschen und die Etherlösungen eingeengt. 35,5 g Öl : n-Propylcyanamid.

B) 1,68 g n-Propylcyanamid wurden in 100 ml abs. Ether vorgelegt. Man setzte bei — 20 °C 0,6 g 80 gew. %iges NaH in drei Portionen zu. Bei — 20 °C wurden 7,4 g 2-Nitro-5-(2-chlor-4-trifluormethylphenoxy)-benzoylchlorid in 20 ml abs. Ether zugetropft. Man erwärmte das Reaktionsgemisch auf Raumtemperatur und rührte über Nach nach. Es wurde abfiltriert, die Etherlösung 4 mal mit Wasser gewaschen, getrocknet und einrotiert : 6,5 g Öl, das erstarrt :

N-[2-Nitro-5-(2-chlor-4-trifluormethylphenoxy)-benzoyl-N'-propylcyanamid.] Die Verbindung wurde mit wenig 80 gew. %igem wäßrigem Methanol ausgerührt : Fp : 90 bis 92 °C (Verbindung Nr. 8).

## Beispiel 2

4,08 g Vinylglykolsäuremethylester wurden in 80 ml Ether mit 3,2 g Pyridin vorgelegt. Man tropfte 11,4 g 2-Nitro-5-(2-chlor-4-trifluor-methylphenoxy)benzoylchlorid, gelöst in 30 ml Ether, zu und rührte 1 Stunde nach.

Dann wurde vom Niederschlag abfiltriert, 4 mal mit Wasser gewaschen, getrocknet und im Vakuum einrotiert.

12,7 g Öl (Verbindung Nr. 46).

NMR :

3,8 ppm, Singulett, 33 Protonen ; 5,4 ppm, Duplett, 1 Proton ; 5,6 ppm, Dublett, 1 Proton ; 5,7 ppm, Dublett, 1 Proton ; 6 ppm, 1 Proton, Multiplett 7,0 ppm, 7,2 ppm, 7,3 ppm, 7,6 ppm, 7,8 ppm, k 8,1 ppm : je 1 Proton mit Feinaufspaltung.

## Beispiel 3

10 g 2-Nitro-5-(2-chlor-4-trifluormethylphenoxy)benzoesäure wurden in 20 ml Dimethylsulfoxid gelöst und mit 5 g $K_2CO_3$ versetzt. Man erwärmte auf 60 °C und kühlte dann auf Raumteperatur ab. Dann tropfte man 12,7 g N-(2-Brompropionyl)-N-propylcyanamid zu, wobei eine exotherme Reaktion (bis 29 °C) einsetzte. Man rührte 1 Stunde nach, rührte in 500 ml Wasser ein und extrahierte 2 mal mit Ether. Die Etherphasen wurden mit Wasser gewaschen, getrocknet und eingeengt. Man rührte mit 200 ml Cyclohexan aus und trennte das Öl ab. Es wurde unter vermindertem Druck (1 mbar) von anhängendem Cyclohexan befreit. 10 g Öl (Verbindung Nr. 36).

NMR :

0,9 ppm, Triplett, 3 Protonen ; 1,55 ppm, Dublett, 3 Protonen ; 1,6 ppm, Multiplett, 2 Protonen ; 3,5 ppm, Triplett, 2 Protonen ; 5,65 ppm, Quartett, 1 Proton ; 6,9-8 ppm, Multiplett, 6 Protonen.

Nach einer dieser in den Beispielen 1 bis 3 beschriebenen Methoden können die folgenden Verbindungen hergestellt werden.

(Siehe Tabelle 1 Seite 5 ff.)

Tabelle 1

| Verbindung | $R^1$ | $R^2$ | $R^3$ | n | Fp. [°C] |
|---|---|---|---|---|---|
| 1 | - | - | H | 0 | 95-116 |
| 2 | - | - | Na | 0 | |
| 3 | - | - | K | 0 | |
| 4 | - | - | Li | 0 | |
| 5 | - | - | $NH_4$ | 0 | |
| 6 | - | - | $CH_3$ | 0 | |
| 7 | - | - | $C_2H_5$ | 0 | 76- 83 |
| 8 | - | - | n-$C_3H_7$ | 0 | 90- 92 |
| 9 | - | - | n-$C_4H_9$ | 0 | 91- 95 |
| 10 | - | - | $CH{\equiv}C-CH_2-$ | 0 | |
| 11 | - | - | $CH_3-O-C_2H_4-$ | 0 | 89- 96 |
| 12 | - | - | 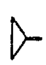 | 0 | |
| 13 | - | - | $CH_2=CH-CH_2-$ | 0 | 82,5-86,5 |
| 14 | H | H | H | 1 | |
| 15 | H | H | Na | 1 | |
| 16 | H | H | $CH_3$ | 1 | |
| 17 | H | H | n-$C_3H_7$ | 1 | |

Tabelle 1 (Fortsetzung)

| Verbindung | $R^1$ | $R^2$ | $R^3$ | n | Fp. [°C] |
|---|---|---|---|---|---|
| 18 | $CH_3$ | H | H | 1 | |
| 19 | $C_2H_5$ | H | H | 1 | |
| 20 | n-$C_4H_9$ | H | H | 1 | |
| 21 | $CH_3$ | $CH_3$ | H | 1 | |
| 22 | $CH_3$ | $CH_2$=CH- | H | 1 | |
| 23 | H | $CH_2$=CH-$CH_2$- | H | 1 | |
| 24 | $CH_3$-O-$CH_2$- | $CH_3$ | H | 1 | |
| 25 | H | $CH_2$=CH- | H | 1 | |
| 26 | $CH_3$-O-$CH_2$- | H | H | 1 | |
| 27 | $CH_3$-O-$C_2H_4$- | $CH_3$ | H | 1 | |
| 28 | $CH_3$-O-CH($CH_3$)-$CH_2$- | $CH_3$ | H | 1 | |
| 29 | $CH_3$-O-CH($CH_3$)-$CH_2$ | H | H | 1 | |
| 30 | H | H | $CH_3$ | 1 | |
| 31 | H | H | $C_2H_5$ | 1 | |
| 32 | H | H | n-$C_3H_7$ | 1 | |
| 33 | H | H | n-$C_4H_9$ | 1 | |
| 34 | $CH_3$ | H | $CH_3$ | 1 | |

Tabelle 1 (Fortsetzung)

| Verbindung | $R^1$ | $R^2$ | $R^3$ | n | Fp. [°C] |
|---|---|---|---|---|---|
| 35 | $CH_3$ | H | $C_2H_5$ | 1 | |
| 36 | $CH_3$ | H | $C_3H_7$ | 1 | Öl |
| 37 | $CH_3$ | H | $C_4H_9$ | 1 | |
| 38 | $C_2H_5$ | H | $CH_3$ | 1 | |
| 39 | $CH_3$ | $CH_3$ | $CH_3$ | 1 | |

Die Diphenyletherderivate der Formel I können beispielsweise in Form von direkt versprühbaren Lösungen, Pulvern, Suspensionen, auch hochprozentigen wäßrigen, öligen oder sonstigen Suspensionen oder Dispersionen, Emulsionen Öldispersionen, Pasten, Stäubemitteln, Streumitteln oder Granulaten durch Versprühen, Vernebeln, Verstäuben, Verstreuen oder Gießen angewendet werden. Die Anwendungformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Toluol, Xylol, Paraffin, Tetrahydronaphthalin, alkylierte Naphthaline oder deren Derivate, Methanol. Ethanol, Propanol, Butanol, Cyclohexanol, Cyclohexanon, Chlorbenzol, Isophoron oder stark polare Lösungsmittel, wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern order wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetat, Sorbitester, Lignin, Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-Holz- und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.%, Wirkstoff.

Die Applikation kann im Vorauflauf- oder im Nachauflaufverfahren erfolgen. Sind die Wirkstoffe bei

Nachauflaufanwendung für gewisse Kulturpflanzen weniger verträglich, so können auch Aufbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Zur Verbreiterung des Wirkungsspektrums und zur Erzielung synergistischer Effekte können die Diphenyletherderivate der Formel I und ihre Salze mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3, 1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Triazinone, Uracile, Benzofuranderivate, Cyclohexan-1,3-dionderivate oder Diphenyletherderivate anderer Struktur sowie andere herbizide Wirkstoffe in Betracht.

Außerdem kann es von Nutzen sein, die Verbindungeen der Formel I allein oder in Kombination mit anderen Herbiziden, auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Bekämpfung von Ernährungs- und Spurenelementmängeln eingesetzt werden.

Die Applikation der Wirkstoffe bzw. der Mittel erfolgt vorzugsweise im Nachauflaufverfahren. Sind die Wirkstoffe für die Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedecke Bodenfläche gelangen (post-directed, lay-by).

Die Aufwandmengen an Wirkstoff betragen je nach Jahreszeit, Bekämpfungsziel und Wachstumsstadium 0,005 bis 5 kg/ha vorzugsweise 0,01 bis 1 kg/ha.

Die herbizide Wirkung der Diphenyletherderivate der Formel I auf das Wachstum der Testpflanzen wird durch folgende Gewächshausversuche gezeigt.

Als Kulturgefäße dienen Plastikblumentöpfe mit 300 $cm^3$ Inhalt und Lehmigem Sand mit etwa 3 % Humus als Substrat. Bei Soja und Erdnuß wird etwas Torfmull zugesetzt, um einen besseren Stand zu erzielen. Die Samer der Testpflanzen werden nach Arten getrennt eingesät.

Zum Zweck der Nachauflaufbehandlung zieht man die Testpflanzen je nach Wuchsform erst bis zu einer Wuchshöhe von 3 bis 15 cm an und behandelt sie danach mit den aufbereiteten Wirkstoffen, die in Wasser suspendiert oder emulgiert und mittels fein verteilender Düsen gespritzt werden. Es werden direkt gesäte und in den gleichen Gefäßen gewachsene Pflanzen ausgewählt, oder sie werden erst als Keimpflanzen getrennt angezogen. Die Aufwandmengen für die Nachauflaufbehandlung variieren je nach Wirkstoff, sie betragen 0,015, 0,03 und 0,06 kg aktiver Substanz pro Hektar (a.S./ha).

Die Versuchsgefäße werden im Gewächshaus aufgestellt, wobei für wärmeliebende Arten wärmere Bereiche (20 bis 36 °C) und für solche gemäßigter Klimate 10 bis 20 °C bevorzugt werden. Die Versuchsperiode erstreckt sich über 2 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 0 keine Schädigung oder normaler Ablauf und 100 kein Aufgang der Pflanzen bzw. völlige Zerstörung zumindest der oberirdischen Teile.

In den Versuchen verwendete man folgende Pflanzenarten :

| Abkürzung | lat. Name | Deutscher Name | Engl. Name |
|---|---|---|---|
| ABUTH | Abutilon theophr. | Chin. Hanf | velvet leaf |
| AMARE | Amaranthus retoflexus | Zurückgekrümmter Fuchsschwanz | redroot pigweed |
| CHEAC | Chenopodium album | Weißer Gänsefuß | lambs-quarters (goosefoot) |
| DATST | Datura stramonium | Gemeiner Stechapfel | Jimsonweed Florida beggarwedd |
| EPHSS | Euphorbia spp. | Wolfsmilcharten | member of the spurge family |
| GALAP | Galium aparine | Klettenlabkraut | catchweed bedstraw |
| LAMAM | Lamium amplexicaule | Stengelumfassende Taubnessel | henbit |
| POLPE | Polygonum persicaria | Flohknöterich | ladystumb |

(Fortsetzung)

| Abkürzung | lat. Name | Deutscher Name | Engl. Name |
|---|---|---|---|
| SEBEX | Sesbania exaltata | Turibaum | hempsesbania (coffeeweed) |
| SOLNI | Solanum nigrum | Schwarzer Nachtschatten | black Nightshade |
| TRZAW | Triticum aestivum | Weizen | wheat |

Für Vergleichsversuche wurden folgende Wirkstoffe herangezogen :

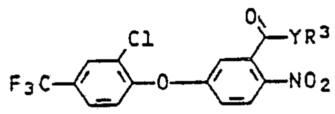

| | $YR^3$ | |
|---|---|---|
| A | $NH(CH_3)$ | EP 27 837, Tab. I, Verb. 2 |
| B | $N(C_2H_5)_2$ | EP 27 837, Tab. I, Verb. 5 |
| C | $NH(C_2H_5)$ | EP 27 837, Tab. I., Verb. 3 |

Bei Nachauflaufapplikation geringer Wirkstoffmengen läßt sich im Gewächshaus ein breites Spektrum unerwünschter Pflanzen beispielsweise mit dem Wirkstoff 35 sicher bekämpfen.

Zur Bekämpfung breitblättriger unerwünschter Vegetation eignet sich im Nachauflaufverfahren Wirkstoff 6 deutlich besser als Beispiel A.

Weit verbreitete Unkrautarten lassen sich bei Nachauflaufanwendung von 0,06 kg a.S./ha der Wirkstoffe 7 und 8 im Gewächshaus gut bekämpfen, wobei Weizen als Kulturpflanze nicht nennenswert geschädigt wird. Die Vergleichsmittel B und C sind den neuen Wirkstoffen in der herbiziden Wirkung deutlich unterlegen.

Ohne nachhaltige Schädigung der Erdnußpflanze können unerwünschte breitblättrige Pflanzen bei Nachauflaufanwendung von 0,015 kg a.S./ha mit Wirkstoff 7 und 9 im Gewächshaus selektiv bekämpft werden. Die Vergleichsmittel B und C zeigen keine brefriedigende herbizide Aktivität.

In Anbetracht des erfaßbaren Wirkungsspektrums zur Unkrautbekämpfung, der Verträglichkeit für Kulturpflanzen oder der erwünschten Beeinflussung des Wachstums derselben sowie angesichts der Vielfalt der Applikationsmethoden können die erfindungsgemäßen Verbindungen in einer großen Zahl von Kulturpflanzen eingesetzt werden.

In Betracht kommen beispielsweise folgende Kulturen :

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rüben |
| Camellia sinensis | Teestrauch |
| Carthamus tinctorius | Saflor-Färberdistel |
| Carya illinoinensis | Pekannußbaum |
| Citrus limon | Zitrone |
| Citrus maxima | Pampelmuse |
| Citrus reticulata | Mandarine |
| Linum usitatissimum | Faserlein |
| Lycopersicon lycopersicum | Tomate |

| Botanischer name | Deutscher Name |
| --- | --- |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum, Gossypium herbaceum, Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactua sativa | Kopfsalat |
| Lens culinaris | Linse |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die neuen Diphenyletherderivate mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, Thiolcarbamate, Halogencarbonsäuren, Triazine, Amide, Harnstoffe, andere Diphenylether, Triazinone, Uracile, Benzofuranderivate, Cyclohexan-1,3-dionderivate und andere in Betracht.

Außerdem kann es von Nutzen sein, die Verbindungen der Formel I allein oder in Kombination mit anderen Herbiziden, auch noch mit weiteren Pflanzenschutzmitteln gemischt gemeinsam auszubringen, beispielsweise mit Mitten zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

**Patentansprüche**

1. Diphenyletherderivate der Formel I

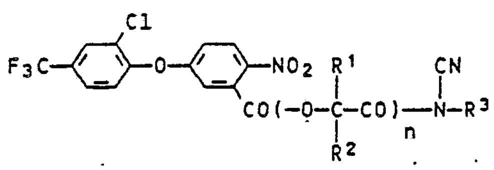

(I)

in der
$R^1$ Wasserstoff, $C_1$-$C_4$-Alkyl oder $C_2$-$C_8$-Alkoxyalkyl,
$R^2$ Wasserstoff, $C_1$-$C_4$-Alkyl, $C_2$-$C_4$-Alkenyl oder $C_2$-$C_4$-Alkinyl,
$R^3$ Wasserstoff, $C_1$-$C_4$-Alkyl, $C_2$-$C_4$-Alkenyl, $C_2$-$C_4$-Alkinyl oder $C_3$-$C_8$-Cycloalkyl, wobei diese Reste gegebenenfalls jeweils durch $C_1$-$C_4$-Alkoxy substituiert sind, und
n 0 oder 1 bedeuten,
sowie Salze der Verbindungen, in denen $R^3$ die Bedeutung von Wasserstoff besitzt.

2. Diphenyletherderivate der Formel I gemäß Anspruch 1, dadurch gekennzeichnet, daß $R^3$ Wasserstoff oder $C_1$-$C_4$-Alkyl und n 0 bedeuten.

3. Diphenyletherderivate der Formel I gemäß Anspruch 1, dadurch gekennzeichnet, daß $R^1$ Wasserstoff oder Methyl, $R^2$ Wasserstoff oder Methyl und $R^3$ Wasserstoff oder $C_1$-$C_4$-Alkyl bedeuten.

4. Verfahren zur Herstellung von Diphenyletherderivaten der Formel I gemäß Anspruch 1, dadurch gekennzeichnet, daß man ein Säurederivat der Formel II

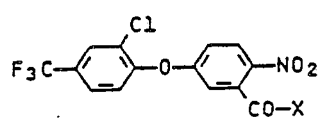

(II)

in der X Halogen oder $C_1$-$C_4$-Alkoxy bedeutet, mit einer Verbindung der Formel III

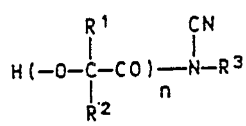

(III)

in der $R^1$, $R^2$, $R^3$ und n jeweils die in Anspruch 1 genannte Bedeutung besitzen, oder einem Salz dieser Verbindung bei einer Temperatur von — 40 bis + 150 °C in einem inerten Verdünnungsmittel gegebenenfalls in Gegenwart einer Base umsetzt.

5. Verfahren zur Herstellung von Diphenyletherderivaten der Formel I gemäß Anspruch 1, in der $R^1$, $R^2$ und $R^3$ jeweils die dort genannte Bedeutung besitzen und n für 1 steht, dadurch gekennzeichnet, daß man

a) ein Säurederivat der Formel IV

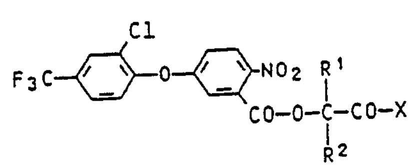

(IV)

in der $R^1$ und $R^2$ jeweils die in Anspruch 1 genannte Bedeutung besitzen und X für Halogen oder $C_1$-$C_4$-Alkoxy steht, mit einer Verbindung der Formel V

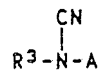

(V)

in der $R^3$ die in Anspruch 1 genannte Bedeutung besitzt und A for Wasserstoff oder ein Metall der Gruppe 1A oder 2A des Perioden systems steht, oder

b) ein Säurederivat der Formel VI

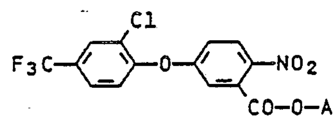

(VI)

in der A die oben genannte Bedeutung besitzt, mit einer Halogenverbindung der Formel VII

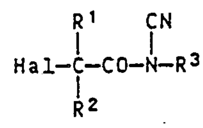

(VII)

in der $R^1$, $R^2$ und $R^3$ jeweils die in Anspruch 1 genannte Bedeutung besitzen und Hal für Halogen steht, jeweils bei einer Temperatur von — 20 bis + 150 °C in einem inerten Verdünnungsmittel gegebenenfalls in Gegenwart einer Base umsetzt.

6. Herbizid, enthaltend inerte Zusatzstoffe und eine wirksame Menge eines Diphenyletherderivates der Formel I gemäß Anspruch 1 oder ein Salz dieser Verbindung.

7. Verfahren zur Bekämpfung von unerwünschtem Pflanzenwachstum, dadurch gekennzeichnet, daß man die unerwünschten Pflanzen und/oder die von unerwünschtem Pflanzenwachstum freizuhaltende Fläche mit einer herbizid wirksamen Menge eines Diphenyletherderivats der Formel I gemäß Anspruch 1 oder ein Salz dieser Verbindung behandelt.

**Claims**

1. A diphenyl ether derivative of the formula I

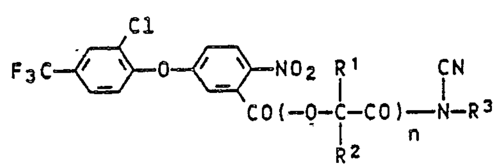

(I)

where

$R^1$ is hydrogen, $C_1$-$C_4$-alkyl or $C_2$-$C_8$-alkoxyalkyl,

$R^2$ is hydrogen, $C_1$-$C_4$-alkyl, $C_2$-$C_4$-alkenyl or $C_2$-$C_4$-alkynyl,

$R^3$ is hydrogen, $C_1$-$C_4$-alkyl, $C_2$-$C_4$-alkenyl, $C_2$-$C_4$-alkynyl or $C_3$-$C_8$-cycloalkyl, each of these radicals being unsubstituted or substituted by $C_1$-$C_4$-alkoxy, and

n is 0 or 1,

and salts of the compounds in which $R^3$ is hydrogen.

2. A diphenyl ether derivative of the formula I as claimed in claim 1, wherein $R^3$ is hydrogen or $C_1$-$C_4$-alkyl and n is 0.

3. A diphenyl ether derivative of the formula I as claimed in claim 1, wherein $R^1$ and $R^2$ are each hydrogen or methyl and $R^3$ is hydrogen or $C_1$-$C_4$-alkyl.

4. A process for the preparation of a diphenyl ether derivative of the formula I as claimed in claim 1, wherein an acid derivative of the formula II

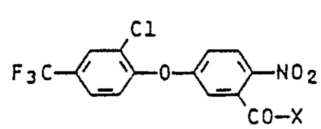

(II)

where X is halogen or $C_1$-$C_4$-alkoxy, is reacted with a compound of the formula III

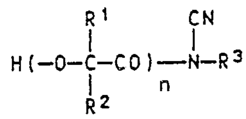

(III)

where $R^1$, $R^2$, $R^3$ and n have the meanings stated in claim 1, or a salt of this compound, at from — 40 to + 150 °C in an inert diluent in the presence or absence of a base.

5. A process for the preparation of a diphenyl ether derivative of the formula I as claimed in claim 1, in which $R^1$, $R^2$ and $R^3$ have the meanings stated there and n is 1, wherein

a) an acid derivative of the formula IV

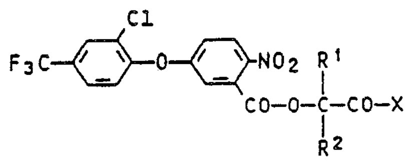

(IV)

where $R^1$ and $R^2$ have the meanings stated in claim 1 and X is halogen or $C_1$-$C_4$-alkoxy, is reacted with a compound of the formula V

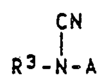

(V)

where $R^3$ has the meanings stated in claim 1 and A is hydrogen or a metal of group 1A or 2A of the Periodic Table, or

b) an acid derivative of the formula VI

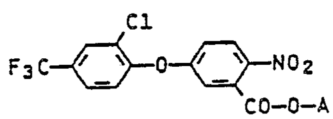

(VI)

where A has the above meanings, is reacted with a halogen compound of the formula VII

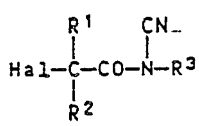

(VII)

where $R^1$, $R^2$ and $R^3$ have the meanings stated in claim 1 and Hal is halogen, in each case at from — 20 to + 150 °C in an inert diluent in the presence or absence of a base.

6. A herbicide containing inert additives and an effective amount of a diphenyl ether derivative of the formula I as claimed in claim 1 or a salt of this compound.

7. A method of controlling undesirable plant growth, wherein the undesirable plants and/or the area to be kept free of undesirable plant growth are treated with a herbicidal amount of a diphenyl ether derivative of the formula I as claimed in claim 1 or a salt of this compound.

**Revendications**

1. Dérivés d'éther diphénylique de formule I

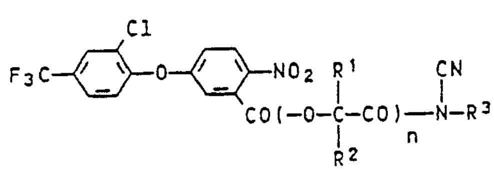

(I)

dans laquelle

$R^1$ représente hydrogène, alkyle en $C_1$-$C_4$ ou alcoxyalkyle en $C_2$-$C_8$,

$R^2$ hydrogène, alkyle en $C_1$-$C_4$, alcényle en $C_2$-$C_4$ ou alcinyle en $C_2$-$C_4$,

$R^3$ hydrogène, alkyle en $C_1$-$C_4$, alcényle en $C_2$-$C_4$, alkinyle en $C_2$-$C_4$ ou cycloalkyle en $C_3$-$C_8$, ces restes étant substitués éventuellement chacun par alcoxy en $C_1$-$C_4$, et

n représente 0 ou 1

ainsi que les sels de ces composés, dans lesquels $R^3$ a la signification d'hydrogène.

2. Dérivés d'éther diphénylique de formule I selon la revendication 1, caractérisés par le fait que $R^3$ représente hydrogène ou alkyle en $C_1$-$C_4$ et $n = 0$.

3. Dérivés d'éther diphénylique de formule I selon la revendication 1, caractérisés par le fait que $R^1$ représente hydrogène ou méthyle, $R^2$ hydrogène ou méthyle et $R^3$ hydrogène ou alkyle en $C_1$-$C_4$.

4. Procédé de préparation de dérivés d'éther diphénylique de formule I selon la revendication 1, caractérisé par le fait que l'on fait réagir un dérivé d'acide de formule II

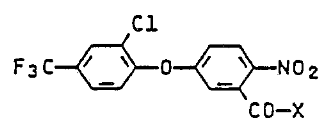

(II)

dans laquelle X représente halogène ou alcoxy en $C_1$-$C_4$ avec un composé de formule III

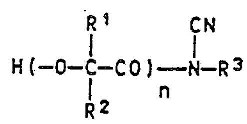

(III)

dans laquelle $R^1$, $R^2$, $R^3$ et n ont les significations données dans la revendication 1, ou un sel de ce composé, à une température de —40 à + 150 °C, dans un diluant inerte, éventuellement en présence d'une base.

5. Procédé de préparation de dérivés d'éther diphénylique de formule I selon la revendication 1, dans laquelle $R^1$, $R^2$ et $R^3$ ont chacun la signification qui y est indiquée et n est mis pour 1, caractérisé par le fait que l'on fait réagir, à une température de —20 à + 150 °C, dans un diluant inerte, éventuellement en présence d'une base,

a) un dérivé d'acide de formule IV

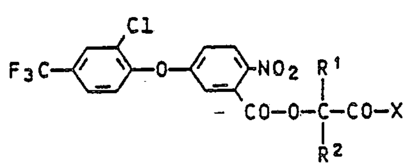

(IV)

dans laquelle $R^1$ et $R^2$ ont chacun la signification indiquée dans la revendication 1 et X est mis pour halogène ou alcoxy en $C_1$-$C_4$, avec un composé de formule V

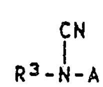

(V)

dans laquelle $R^3$ a la signification donnée dans la revendication 1 et A est mis pour hydrogène ou un métal du groupe 1A ou 2A du système périodique, ou

b) un dérivé d'acide de formule VI

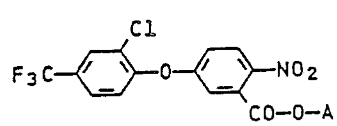

(VI)

dans laquelle A a la signification indiquée plus haut, avec un composé halogéné de formule VII

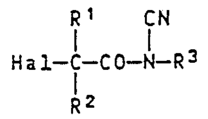

(VII)

dans laquelle $R^1$, $R^2$ et $R^3$ ont chacun la signification donnée dans la revendication 1 et Hal est mis pour halogène.

6. Herbicide contenant des additifs inertes et une quantité efficace d'un dérivé d'éther diphénylique de formule I selon la revendication 1 ou un sel de ce composé.

7. Procédé pour lutter contre la croissance de plantes indésirables, caractérisé par le fait que l'on traite les plantes indésirables et/ou les surfaces à maintenir exemptes d'une croissance de plantes indésirables avec une quantité efficace d'un dérivé d'éther diphénylique de formule I selon la revendication 1 ou un sel de ce composé.